# EUROPEAN PATENT SPECIFICATION

(11) **EP 3 722 697 B1**
(45) Date of publication and mention of the grant of the patent: **02.08.2023**
(21) Application number: 17934051.8
(22) Date of filing: 07.12.2017
(51) Int. Cl.: F24H 4/02, F24H 1/18, F24D 3/08, F24D 11/02, F24D 17/02, F24D 19/10

(54) **HOT WATER SUPPLY SYSTEM**
HEISSWASSERVERSORGUNGSSYSTEM
SYSTÈME D'ALIMENTATION EN EAU CHAUDE

(43) Date of publication of application: 14.10.2020
(73) Proprietor: Mitsubishi Electric Corporation, Chiyoda-ku Tokyo 100-8310 (JP)
(72) Inventor: ISHII, Naoto, Tokyo 100-8310 (JP); ABE, Toshiro, Tokyo 100-8310 (JP); OTSUBO, Yusuke, Tokyo 100-8310 (JP); KADOWAKI, Kimitaka, Tokyo 100-8310 (JP)
(74) Representative: Pfenning, Meinig & Partner mbB
(86) International application number: PCT/JP2017/044028
(87) International publication number: WO 2019/111379

(56) References cited:
- EP-A2- 2 706 303
- WO-A1-2009/107261
- WO-A1-2013/084301
- WO-A1-2013/084301
- WO-A1-2015/182005
- WO-A1-2017/134743
- WO-A1-2017/134743
- WO-A1-2017/145238
- JP-A- 2007 327 725
- JP-A- 2007 327 725
- JP-A- 2010 065 852
- JP-A- 2010 065 852
- JP-A- 2014 052 143

## Description

### Technical Field

The present disclosure relates to a hot-water supply system including a circulation circuit heat exchanger in which hot water flowing in a secondary circulation circuit is heated through a heat medium flowing in a primary circulation circuit.

### Background Art

Hitherto, there have been proposed hot-water supply systems which are excellent in maintainability considering a case where wear of a heat exchanger in a heat pump occurs due to corrosion, a case where removal of deposited scale is needed, or for other cases, and which incur only low running costs (see Patent Literature 1, for example).

The hot-water supply system of Patent Literature 1 includes a heat source, a primary circulation circuit communicating with the heat source, a heat storage tank in which hot water heated at a predetermined temperature is stored, a secondary circulation circuit communicating with the heat storage tank, and a circulation circuit heat exchanger that heats the hot water flowing in the secondary circulation circuit through the heat medium flowing in the primary circulation circuit.

### Citation List

### Patent Literature

Patent Literature 1: Japanese Unexamined Patent Application Publication No. 2010-65852

WO 2017/145238 A1 relates to a storage type hot water supplying system. The system includes: a heat source; a primary circulation circuit communicating with the heat source; a heat storage tank; a secondary circulation circuit communicating with the heat storage tank; a circulation circuit heat exchanger configured to heat hot water circulating in the secondary circulation circuit, through a heat medium circulating in the primary circulation circuit; and a controller; a first temperature detection unit provided in the primary circulation circuit between an inlet of the circulation circuit heat exchanger and the heat source; and a second temperature detection unit provided in the secondary circulation circuit between an outlet of the circulation circuit heat exchanger (38) and the heat storage tank; the primary circulation circuit including a first pump, a first flow control device and a first flow rate sensor, the secondary circulation circuit including a second pump, a second flow control device and a second flow rate sensor; wherein the controller controls the first and second flow control devices so that the flow rate of the heat medium circulating in the primary circulation circuit and the flow rate of the hot water circulating in the secondary circulation circuit are equalized and wherein in a heat storage operation, a flow rate of the heat medium circulating in the primary circulation circuit is used as a target flow rate of the hot water circulating in the secondary circulation circuit.

WO 2013/084301 A1 relates to a heat pump type heating/hot-water supply system. The system comprises a water heating heat exchanger for heating water by heat exchange with a heating medium heated by a heat pump unit, an indoor heating unit, a heating circulation circuit for selectively pumping the heating medium to either of the water heating heat exchanger and the indoor heating unit using a heating medium pump, and a hot-water accumulating circuit that sends water in a hot-water storage tank to the water heating heat exchanger and returns water having passed through the water heating heat exchanger to the hot-water storage tank using a water pump. The volumetric flow rate of the heating medium pumped to the water heating heat exchanger by the heating medium pump is higher than or equal to the volumetric flow rate of the water pumped to the water heating heat exchanger by the water pump.

WO 2017/134743 A1 relates to a water-heating system and a control method therefor. The system comprises: a heat pump hot water supplier; a hot water storage tank storing hot water heated by the heat pump hot water supplier; a heat exchanger using hot water stored in the hot water storage tank as a heat medium on a high temperature side; a hot water outflow pipe allowing communication between the heat pump hot water supplier and the hot water storage tank; a water inflow pipe allowing communication between the heat pump hot water supplier and the hot water storage tank; a hot water storage tank hot water outflow pipe allowing communication between the hot water storage tank and the heat exchanger; a hot water storage tank water inflow pipe allowing communication between the hot water storage tank and the heat exchanger; an on-site water inflow pipe communicating with the heat exchanger; an on-site hot water outflow pipe communicating with the heat exchanger; a hot water storage tank water inflow-side flow rate sensor installed in the hot water storage tank water inflow pipe; an on-site water inflow-side flow rate sensor installed in the on-site water inflow pipe; and a circulation pump. The system further comprises a controller, which receives values detected by the hot water storage tank water inflow-side flow rate sensor and the on-site water inflow-side flow rate sensor, generates an analog signal for controlling the circulation pump so that the value of the hot water storage tank water inflow-side flow rate sensor becomes equal to the value of the on-site water inflow-side flow rate sensor, transmits the generated analog signal to the circulation pump, and controls output of the circulation pump.

EP 2706303 A2 relates to a heat pump system. The system includes a water/refrigerant heat exchanger and controls a water volume by means of a water pump such that a temperature of hot water delivered from the heat pump system meets a target temperature. The system further includes a performance degradation determining part which determines performance degradation due to scale build-up in the water/refrigerant heat exchanger on the basis of the temperature of the delivered hot water and a temperature difference between a refrigerant outlet temperature and a water inlet temperature of the water/refrigerant heat exchanger.

### Summary of Invention

### Technical Problem

However, in the hot-water supply system described in Patent Literature 1, since the primary circulation circuit and the secondary circulation circuit are controlled separately, a difference in flow rate occurs between these circulation circuits, thereby causing deterioration of the coefficient of performance (COP) of the heat source.

The present disclosure has been made to solve the abovementioned problem, and is aimed at providing a hot-water supply system that can prevent the coefficient of performance of the heat source from dropping.

### Solution to Problem

A hot-water supply system according to an embodiment of the present disclosure includes a heat source, a primary circulation circuit communicating with the heat source, a heat storage tank configured to store hot water, a secondary circulation circuit communicating with the heat storage tank, a circulation circuit heat exchanger configured to heat hot water circulating in the secondary circulation circuit, through a heat medium circulating in the primary circulation circuit, a controller, a notification unit, a first temperature detection unit provided in the primary circulation circuit between an inlet of the circulation circuit heat exchanger and the heat source and a second temperature detection unit provided in the secondary circulation circuit between an outlet of the circulation circuit heat exchanger and the heat storage tank. The primary circulation circuit includes a first pump configured to circulate the heat medium, a first flow control device configured to control a circulation amount of the heat medium, and a first flow rate sensor configured to detect a flow rate of the circulating heat medium. The secondary circulation circuit includes a second pump configured to circulate the hot water, a second flow control device configured to control a circulation amount of the hot water, and a second flow rate sensor configured to detect a flow rate of the circulating hot water. The controller is configured to control the first flow control device and the second flow control device so that the flow rate of the heat medium circulating in the primary circulation circuit and the flow rate of the hot water circulating in the secondary circulation circuit are equalized. The controller is configured to, in a heat storage operation, use a flow rate of the heat medium circulating in the primary circulation circuit as a target flow rate of the hot water circulating in the secondary circulation circuit. The controller is configured to, in a test operation, obtain a temperature difference between a first temperature detected by the first temperature detection unit and a second temperature detected by the second temperature detection unit when the first temperature and the second temperature are in a predetermined reference range. The controller is configured to, in a heat storage operation, obtain a temperature difference between the first temperature and the second temperature when the first temperature and the second temperature are in the reference range. The notification unit is configured to, when a difference between the temperature difference obtained at the test operation and the temperature difference obtained at the heat storage operation is equal to or more than the predetermined reference value, notify that a time for performing maintenance of the circulation circuit heat exchanger comes.

### Advantageous Effects of Invention

According to the hot-water supply system of an embodiment of the present disclosure, the first flow control device and the second flow control device are controlled with a single controller so that a circulation amount of the heat medium flowing in the primary circulation circuit and a circulation amount of the hot water flowing in the secondary circulation circuit are equalized. As a result, a difference in flow rate between these circulation circuits can be prevented from occurring and the coefficient of performance of the heat source can be prevented from dropping.

### Brief Description of Drawings

[Fig. 1] Fig. 1 is a first schematic diagram illustrating an example of a hot-water supply system according to an embodiment of the present invention.
[Fig. 2] Fig. 2 is a second schematic diagram illustrating an example of a hot-water supply system according to an embodiment of the present invention.
[Fig. 3] Fig. 3 is a third schematic diagram illustrating an example of a hot-water supply system according to an embodiment of the present invention.
[Fig. 4] Fig. 4 is a schematic diagram illustrating an example of a heat source in the hot-water supply system of Fig. 1.
[Fig. 5] Fig. 5 is a flowchart illustrating an example of control in a test operation of the hot-water supply system according to an embodiment of the present invention.
[Fig. 6] Fig. 6 is a flowchart illustrating an example of control in a heat storage operation of the hot-water supply system according to an embodiment of the present invention.

### Description of Embodiment

An embodiment of the present invention will be described below based on the drawings. Note that the present invention is not limited by the embodiment described below. In addition, dimensional relationships among the components in the drawings may be different from actual ones.

### Embodiment

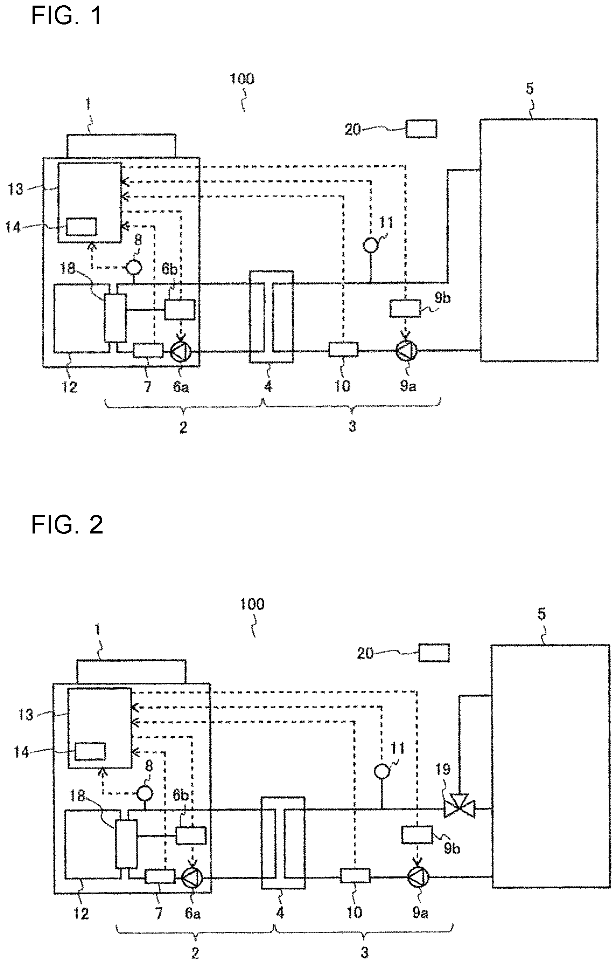

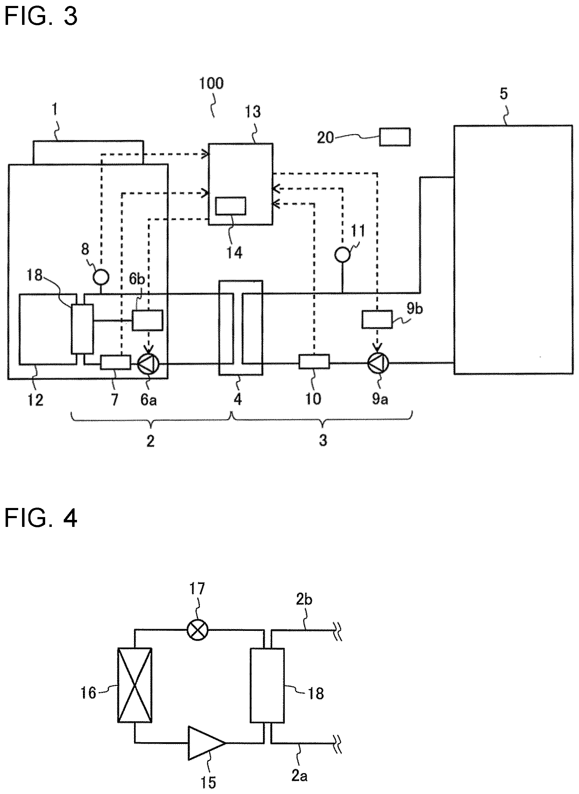

Fig. 1 is a first schematic diagram illustrating an example of a hot-water supply system 100 according to an embodiment of the present invention Fig. 2 is a second schematic diagram illustrating an example of the hot-water supply system 100 according to an embodiment of the present invention. Fig. 3 is a third schematic diagram illustrating an example of the hot-water supply system 100 according to an embodiment of the present invention.

As illustrated in Fig. 1, the hot-water supply system 100 according to the embodiment includes a heat source unit 1 having a heat source 12, a primary circulation circuit 2 communicating with the heat source unit 1, a heat storage tank 5 in which hot water heated at a predetermined temperature is stored, a secondary circulation circuit 3 communicating with the heat storage tank 5, and a circulation circuit heat exchanger 4 in which hot water flowing in the secondary circulation circuit 3 is heated through a heat medium flowing in the primary circulation circuit 2.

The hot-water supply system 100 also includes a notification unit 20, such as a loudspeaker that issues an alert by sound, a light-emitting diode indicator that issues an alert by light, or another type of indicator. In addition, a controller 13 is provided inside of the heat source unit 1. Note that, although the number of the heat storage tanks 5 provided in the present embodiment is one, the number is not limited thereto and a plurality of the heat storage tanks 5 may be used.

As illustrated in Fig. 2, a three-way valve 19 may be provided in the secondary circulation circuit 3 at a point between an outlet of the circulation circuit heat exchanger 4 and the heat storage tank 5. In such a hot-water supply system 100, the efficiency of storing heat into the heat storage tank 5 can be increased by switching the three-way valve 19 depending on the temperature of the hot water passing through the secondary circulation circuit 3.

The controller 13 includes, for example, dedicated hardware or a central processing unit (CPU, and also referred to as a central processor, a processing unit, an arithmetic unit, a microprocessor, a microcomputer, or a processor) that executes programs stored in a memory. The controller 13 is configured to perform various data processing such as arithmetic processing to control the entire hot-water supply system 100. The controller 13 also includes a memory device 14 therein. The memory device 14 is configured to be a random access memory (RAM), for example, to store various information.

As illustrated in Fig. 3, the controller 13 may be installed outside the heat source unit 1 instead of inside the heat source unit 1. Moreover, the memory device 14 may be installed outside the controller 13 instead of inside the controller 13.

Fig. 4 is a schematic diagram illustrating an example of the heat source 12 in the hot-water supply system 100 of Fig. 1.

The heat source 12 is configured to heat the heat medium flowing in the primary circulation circuit 2, and, as illustrated in Fig. 4, is configured to be a heat source circulation circuit that includes an expansion device 17, a first heat source heat exchanger 16, a compressor 15, and a second heat source heat exchanger 18. In the second heat source heat exchanger 18, heat exchange is caused to perform between refrigerant in the heat source circulation circuit and the heat medium in the primary circulation circuit 2. As the refrigerant in the heat source circulation circuit in this case, carbon dioxide may be used, for example. When carbon dioxide is used as the refrigerant, the lower the temperature of the heat medium flowing into the second heat source heat exchanger 18 from the primary circulation circuit 2 is, the higher the efficiency of the operation becomes due to the nature of the refrigerant.

Note that, in the present embodiment, the heat source 12 is configured as a heat source circulation circuit of a heat pump, however, the heat source 12 may be configured by using a heater, a boiler or another device as long as the device can add heat to the primary circulation circuit 2.

As illustrated in Fig. 1, the primary circulation circuit 2 is configured to be a closed loop circuit, and is configured to be a circuit in which the heat medium heated to a high temperature by the heat source 12 flows into the circulation circuit heat exchanger 4 and the heat medium cooled down to a low temperature at the circulation circuit heat exchanger 4 is brought into the heat source 12 to be reheated. As described above, the hot-water supply system 100 according to the present embodiment has a configuration in which the heat medium circulates between the heat source 12 and the circulation circuit heat exchanger 4 while changing the temperature thereof.

Moreover, in the hot-water supply system 100, a first pump 6 and a first flow control device 6b are provided in the primary circulation circuit 2 between an outlet of the circulation circuit heat exchanger 4 and the heat source 12. In addition, a first flow rate sensor 7 that is configured to detect the flow rate of the heat medium circulating in the primary circulation circuit 2 is provided downstream of the first pump 6a. The first flow control device 6b is configured to control the circulation amount of the heat medium in the primary circulation circuit 2 and includes an inverter or a flow control valve, for example.

Moreover, a first temperature detection unit 8 that includes a thermistor or another device, for example, is provided between an inlet of the circulation circuit heat exchanger 4 and the second heat source heat exchanger 18 to detect the temperature of the heat medium heated at the heat source 12. Note that, as the heat medium circulating in the primary circulation circuit 2, water is used, for example, however, the heat medium is not limited to water and may be brine or another medium.

The secondary circulation circuit 3 is configured to be a circuit in which cool water supplied from a lower part of the heat storage tank 5 is caused to flow into the circulation circuit heat exchanger 4 to exchange heat with the heat medium flowing in the primary circulation circuit 2 and high-temperature water heated by the heat exchange is caused to flow into an upper part of the heat storage tank 5 again. In addition, the secondary circulation circuit 3 is connected to the heat storage tank 5, and the heat storage tank 5 is configured to store heat in the heat storage tank 5 by supplying cool water to the secondary circulation circuit 3 and causing hot water, which has been subjected to heat exchange in the circulation circuit heat exchanger 4, to flow into the heat storage tank 5.

In the hot-water supply system 100, a second pump 9a and a second flow control device 9b are provided in secondary circulation circuit 3 between a lower part of the heat storage tank 5 and the circulation circuit heat exchanger 4. In addition, a second flow rate sensor 10 that is configured to detect the flow rate of the hot water circulating in the secondary circulation circuit 3 is provided downstream of the second pump 9a. The second flow control device 9b is configured to control the circulation amount of the hot water in the secondary circulation circuit 3 and includes an inverter or a flow control valve, for example.

Moreover, a second temperature detection unit 11 that is formed of a thermistor or another device, for example, is provided between an outlet of the circulation circuit heat exchanger 4 and the heat storage tank 5 to detect the temperature of the hot water, which has been subjected to heat exchange in the circulation circuit heat exchanger 4.

The circulation circuit heat exchanger 4 is provided between the primary circulation circuit 2 and the secondary circulation circuit 3. The circulation circuit heat exchanger 4 is provided to cause heat exchange to be performed between the heat medium flowing in the primary circulation circuit 2 and the hot water flowing in the secondary circulation circuit 3. Therefore, the circulation circuit heat exchanger 4 may be any device capable of performing heat exchange between the heat medium flowing in the primary circulation circuit 2 and the hot water flowing in the secondary circulation circuit 3, and includes a plate-type heat exchanger, for example.

Next, control methods using the hot-water supply system 100 according to the present embodiment will be described. To control the hot-water supply system 100, a test operation that is not intended for heat storage is performed at the time of installation and then a heat storage operation is performed to store heat. With these procedures, the heat storage operation can be performed in the hot-water supply system.

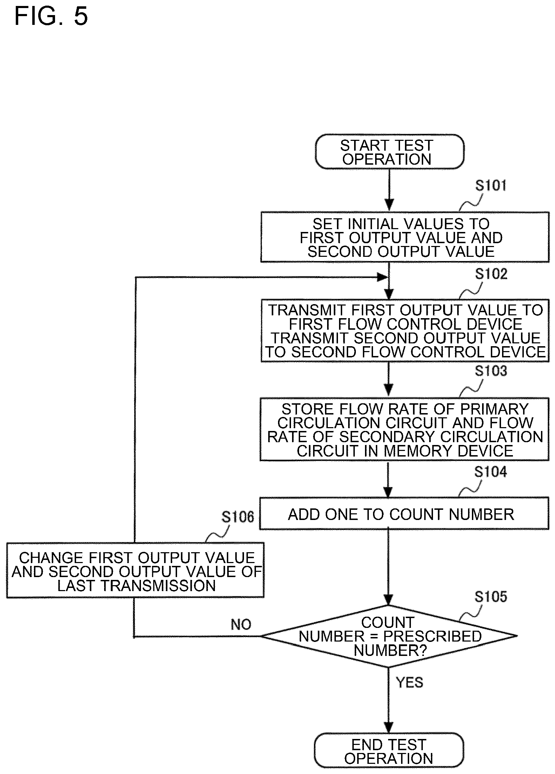

Fig. 5 is a flowchart for illustrating an example of control in a test operation of the hot-water supply system 100 according to an embodiment of the present invention.

First, an outline of control in a test operation of the hot-water supply system 100 according to the present embodiment will be explained with reference to Fig. 5.

In the hot-water supply system 100, with operations of the first pump 6a and the first flow control device 6b provided in the primary circulation circuit 2 and the second pump 9a and the second flow control device 9b provided in the secondary circulation circuit 3, the flow rate of the heat medium flowing in the primary circulation circuit 2 and the flow rate of the hot water flowing in the secondary circulation circuit 3 can be changed freely.

The controller 13 sets predetermined initial values to a first output value and a second output value (step S101), and transmits the set first output value to the first flow control device 6b and the set second output value to the second flow control device 9b (step S102).

After step S102, the controller 13 stores flow rates of the primary circulation circuit 2 and the secondary circulation circuit 3 detected by the first flow rate sensor 7 and the second flow rate sensor 10 respectively in the memory device 14 (step S103).

After step S103, the controller 13 adds one to a number of counts (initial value zero) (step S104), and determines whether or not the number of counts reaches a predetermined number of counts (step S105).

In step S105, the controller 13 determines that the number of counts reaches the predetermined number (YES in step S105), the test operation is completed. Meanwhile, the controller 13 determines that the number of counts does not reach the predetermined number (NO in step S105), the controller 13 changes the first output value and the second output value from the values that have been transmitted last time (step S106). Then, the controller 13 transmits the changed first output value to the first flow control device 6b and the changed second output value to the second flow control device 9b (step S102).

The controller 13 repeats the processes of steps S102 to S106 until the controller 13 determines that the number of counts reaches the predetermined number, and stores flow rates of the primary circulation circuit 2 and the secondary circulation circuit 3 for each output, in the memory device 14.

When the first flow control device 6b and the second flow control device 9b are inverters, for example, the controller 13 transmits voltage values to the inverters. Then, while the processes of steps S102 to S106 are being repeated, the rotation speed of each of the first pump 6a and the second pump 9a changes in stages, and the primary circulation circuit 2 and the secondary circulation circuit 3 for each voltage are respectively stored in the memory device 14.

By performing the test operation, a correspondence table that shows a correspondence relation between flow rates in the primary circulation circuit 2 and outputs and a correspondence relation between flow rates in the secondary circulation circuit 3 and outputs is formulated into a correspondence table.

The correspondence table is used in a heat storage operation, which will be performed later, to control the flow rate of each of the primary circulation circuit 2 and the secondary circulation circuit 3. For example, when the first flow control device 6b and the second flow control device 9b are inverters, the rotation speeds of the first pump 6a and the second pump 9a can be changed according to loads. Thus, in a case where load is small and a high flow rate is not required, operation can be performed with minimum power consumption because the rotation speeds of the first pump 6a and the second pump 9a can be prevented from increasing more than necessary. In addition, by controlling the flow rates of the primary circulation circuit 2 and the secondary circulation circuit 3 to have a same flow rate, it is possible to improve the coefficient of performance as the entire hot-water supply system 100.

Note that, as the first flow control device 6b and the second flow control device 9b, flow control valves may be used instead of inverters, or a combination of an inverter and a flow control valve may be used.

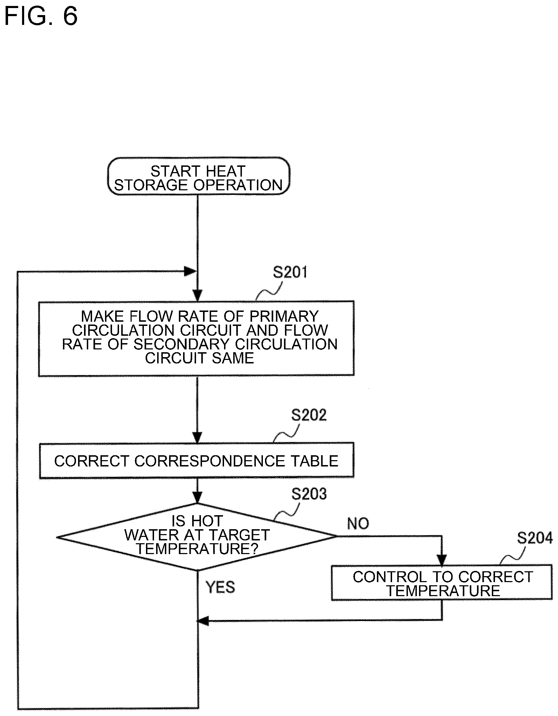

Fig. 6 is a flowchart for illustrating an example of control in a heat storage operation of the hot-water supply system 100 according to an embodiment of the present invention.

Next, an outline of control in a heat storage operation of the hot-water supply system 100 according to the present embodiment will be explained using Fig. 6. The control of a heat storage operation in which hot water (hot tap water) supplied from the secondary circulation circuit 3 to the heat storage tank 5 is adjusted to have a target temperature by using the correspondence table created in the test operation will be explained below. In the heat storage operation, the controller 13 controls the heat source 12, primary circulation circuit 2, and the secondary circulation circuit 3 all together. Note that, even without the secondary circulation circuit 3, a heat storage operation can be performed by controlling only the heat source 12 and the primary circulation circuit 2.

First, the controller 13 controls the first flow control device 6b and the second flow control device 9b so that the flow rate of the primary circulation circuit 2 and the flow rate of the secondary circulation circuit 3 are equalized (step S201). More specifically, with the flow rate of the primary circulation circuit 2 as a reference, the controller 13 detects the flow rate of the secondary circulation circuit 3 by using the second flow rate sensor 10 during operation. Then, with the detected flow rate as a target flow rate of the secondary circulation circuit 3, the controller 13 selects a corresponding output value from the correspondence table created in the test operation, to thereby obtain the target flow rate in the secondary circulation circuit 3, and transmits the output value to the second flow control device 9b. As a result, the flow rate of the primary circulation circuit 2 and the flow rate of the secondary circulation circuit 3 can be controlled to be equal at all times.

After step S201, the controller 13 corrects the correspondence table created in the test operation (step S202). For example, a case where a flow rate of 10 litter/minute is obtained at 50 percent output in the test operation but a flow rate of 12 litter/minute is obtained at 50 percent output in the heat storage operation in the secondary circulation circuit 3 is presumed. In such a case, without correction, the flow rate of the secondary circulation circuit 3 differs from the flow rate of the primary circulation circuit 2. Thus, based on the value of the second flow rate sensor 10 on the secondary circulation circuit 3, the controller 13 corrects the difference. That is, in the correspondence table, a flow rate of 10 litter/minute at 50 percent output is corrected to a flow rate of 12 litter/minute at 50 percent output by the controller 13.

After step S202, based on the second temperature detection unit 11, the controller 13 determines whether or not the temperature of the hot water supplied to the heat storage tank 5 from the secondary circulation circuit 3 is at the target temperature (step S203).

In step S203, when the controller 13 determines that the temperature of the hot water supplied to the heat storage tank 5 from the secondary circulation circuit 3 is at the target temperature (YES in step S203), the process returns to step S201. Meanwhile, when the controller 13 determines that the temperature of the hot water supplied to the heat storage tank 5 from the secondary circulation circuit 3 is not at the target temperature (NO in step S203), the process proceeds to step S204.

In step S204, the controller 13 corrects the temperature of the hot water supplied to the heat storage tank 5 from the secondary circulation circuit 3. At this time, the controller 13 controls the heat source 12 or the primary circulation circuit 2 to control the temperature and the flow rate of the heat medium in the primary circulation circuit 2.

When the temperature of the hot water supplied to the heat storage tank 5 from the secondary circulation circuit 3 is lower than the target temperature, control is performed so that, for example, the frequency of the compressor 15 in the heat source 12 is increased or the flow rate of the medium in the primary circulation circuit 2 is increased to raise the temperature of the heat medium in the primary circulation circuit 2. When the temperature of the hot water supplied to the heat storage tank 5 from the secondary circulation circuit 3 is higher than the target temperature, control is performed so that, for example, the frequency of the compressor 15 in the heat source 12 is reduced or the flow rate of the medium in the primary circulation circuit 2 is reduced to lower the temperature of the heat medium in the primary circulation circuit 2.

As described above, even when the flow rate of the heat medium flowing in the primary circulation circuit 2 is changed due to the process of the step S204, the flow rate of the heat medium flowing in the primary circulation circuit 2 and the flow rate of the hot water flowing in the secondary circulation circuit 3 can be maintained constant by performing processes of steps S201 and S202.

By continuously performing processes of steps S201 to S204, the target temperature and the target flow rate of the heat medium of the primary circulation circuit 2 are determined according to the temperature of the hot water supplied to the heat storage tank 5 from the secondary circulation circuit 3. Then, a target flow rate of the secondary circulation circuit 3 is obtained by adding a value detected by the first flow rate sensor 7 to a difference between the determined target flow rate of the primary circulation circuit 2 and the current target flow rate of the primary circulation circuit 2. Consequently, the flow rate of the primary circulation circuit 2 and the flow rate of the secondary circulation circuit 3 can be maintained as equal and the temperature of the hot water supplied to the heat storage tank 5 from the secondary circulation circuit 3 can kept at the target temperature, and thus operation can be realized with an excellent coefficient of performance.

Moreover, in the heat storage operation, a minimum value for the flow rate of the primary circulation circuit 2 and a minimum value for the flow rate of the secondary circulation circuit 3 are predetermined, and so that the hot water circulating in the secondary circulation circuit 3 can be controlled without having a flow rate lower than the predetermined minimum flow rate.

In addition, the flow rates can be controlled to obtain hot tap water having a target temperature in such a manner that the flow rate of the heat medium of the primary circulation circuit 2 and the flow rate of the hot water of the secondary circulation circuit 3 are compared with each other and the flow rate of the heat medium of the primary circulation circuit 2 is intentionally controlled to be larger than the flow rate of the hot water of the secondary circulation circuit 3 at all times. On the other hand, the flow rates can also be controlled to obtain hot tap water having a target temperature in such a manner that the flow rate of the heat medium of the primary circulation circuit 2 is intentionally controlled to be smaller than the flow rate of the hot water of the secondary circulation circuit 3 at all times.

Furthermore, in the heat storage operation, the temperature and the flow rate of the heat medium in the primary circulation circuit 2 and the temperature and the flow rate of the hot water in the secondary circulation circuit 3 can be detected during operation. Thus, by using the detected information, it is possible to determine reduction in heat exchanging capacity of the circulation circuit heat exchanger 4 due to deposition of scales or other reasons.

First, in a test operation, when the temperature of the heat medium of the primary circulation circuit 2 and the temperature of the hot water of the secondary circulation circuit 3 are in a predetermined reference range, a difference between these temperatures is recorded. Next, in a heat storage operation, when the temperature of the heat medium of the primary circulation circuit 2 and the temperature of the hot water of the secondary circulation circuit 3 are in a predetermined reference range, a difference between these temperatures is recorded.

Then, when the temperature difference in the heat storage operation is compared with the temperature difference in the test operation and if a difference of a predetermined reference value or more between the temperature difference of the heat storage operation and the temperature difference of the test operation, it is determined that a maintenance is required for the circulation circuit heat exchanger 4, and the notification unit 20 notifies that a time for performing maintenance of the circulation circuit heat exchanger 4 comes. In this way, the user is notified that the circulation circuit heat exchanger 4 needs maintenance. Consequently, operation in a condition where the capacity of the entire hot-water supply system 100 is deteriorated can be avoided.

Moreover, even in a case where the flow rate of the secondary circulation circuit 3 is significantly reduced due to failure of the second pump 9a or the second flow control device 9b, when the value detected by the second flow rate sensor 10 in the secondary circulation circuit 3 is extremely low and is reduced by a predetermined reference value or more, the operations of the heat source 12 and the primary circulation circuit 2 are stopped correspondingly. Thus, failure of the heat source 12 and unnecessary operation of the heat source 12 can be avoided in advance.

Furthermore, even when the heat medium flowing in the primary circulation circuit 2 is different from the medium, that is water, flowing in the secondary circulation circuit 3, control can be performed to obtain an appropriate supply temperature.

As described above, the hot-water supply system 100 according to the present embodiment includes the heat source 12, the primary circulation circuit 2 communicating with the heat source 12, the heat storage tank 5 configured to store hot water therein, the secondary circulation circuit 3 communicating with the heat storage tank 5, the circulation circuit heat exchanger 4 configured to heat the hot water circulating in the secondary circulation circuit 3, through the heat medium circulating in the primary circulation circuit 2, and the controller 13. The primary circulation circuit 2 includes the first pump 6a configured to circulate the heat medium, the first flow control device 6b configured to control the circulation amount of the heat medium, and the first flow rate sensor 7 configured to detect the flow rate of the circulating heat medium. The secondary circulation circuit 3 includes the second pump 9a configured to circulate the hot water, the second flow control device 9b configured to control the circulation amount of the hot water, and the second flow rate sensor 10 configured to detect the flow rate of the circulating hot water. The controller 13 is configured to control the first flow control device 6b and the second flow control device 9b so that the flow rate of the heat medium circulating in the primary circulation circuit 2 and the flow rate of the hot water circulating in the secondary circulation circuit 3 are equalized.

In the hot-water supply system of the related art, since the primary circulation circuit and the secondary circulation circuit are controlled separately, a difference in flow rate occurs between these circulation circuits, and as a result, the coefficient of performance (COP) of the heat source may drop and the number of restrictions on control and the frequency of occurrence of control failures may be increased.

However, according to the hot-water supply system 100 according to the present embodiment, with a single controller 13, the first flow control device 6b and the second flow control device 9b are controlled so that the circulation amount of the heat medium flowing in the primary circulation circuit 2 and the circulation amount of the hot water flowing in the secondary circulation circuit 3 are equalized. Therefore, a flow rate difference caused between these circulation circuits can be suppressed, and deterioration of the coefficient of performance of the heat source 12, increase in the number of restrictions on control and increase in the number of control failures can be avoided.

The hot-water supply system 100 according to the present embodiment includes the memory device 14, and, in a test operation, the controller 13 stores, in the memory device 14, the flow rate of the heat medium circulating in the primary circulation circuit 2 for each output transmitted to the first flow control device 6b and the flow rate of the hot water circulating in the secondary circulation circuit 3 for each output transmitted to the second flow control device 9b.

According to the hot-water supply system 100 according to the present embodiment, a correspondence table that shows correspondence relations between flow rate in the primary circulation circuit 2 and output and correspondence relations between flow rate in the secondary circulation circuit 3 and output can be created.

In a heat storage operation, the controller 13 of the hot-water supply system 100 according to the embodiment uses a flow rate of the heat medium circulating in the primary circulation circuit 2 as a target flow rate of the hot water circulating in the secondary circulation circuit 3.

According to the hot-water supply system 100 according to the embodiment, the temperature of the hot water supplied to the heat storage tank 5 from the secondary circulation circuit 3 can be kept at target temperature while the flow rate in the primary circulation circuit 2 and the flow rate in the secondary circulation circuit 3 are being maintained as equal, and as a result, operation with an excellent coefficient of performance is possible.

In the hot-water supply system 100 according to the embodiment, the notification unit 20 is provided. The first temperature detection unit 8 is provided in the primary circulation circuit 2 between an inlet of the circulation circuit heat exchanger 4 and the heat source 12, and the second temperature detection unit 11 is provided in the secondary circulation circuit 3 between an outlet of the circulation circuit heat exchanger 4 and the heat storage tank 5. In a test operation, the controller 13 obtains a temperature difference between a first temperature detected by the first temperature detection unit 8 and a second temperature detected by the second temperature detection unit 11 when the first temperature and the second temperature are in a predetermined reference range. In a heat storage operation, the controller 13 obtains a temperature difference between the first temperature and the second temperature when the first temperature and the second temperature are in the reference range. When a difference of a predetermined reference value or more is found between the temperature difference obtained at the test operation and the temperature difference obtained at the heat storage operation, the notification unit 20 notifies that a time for performing maintenance of the circulation circuit heat exchanger 4 comes.

According to the hot-water supply system 100 according to the present embodiment, a time for performing maintenance of the circulation circuit heat exchanger 4 can be notified to the user, and as a result, operation in a condition where the capacity of the entire hot-water supply system 100 is deteriorated can be avoided.

The controller 13 of the hot-water supply system 100 according to the present embodiment stops the first pump 6a and the heat source 12 when the flow rate of the hot water circulating in the secondary circulation circuit 3 is reduced by a predetermined reference value or more.

In the hot-water supply system 100 according to the present embodiment, failure of the heat source 12 and unnecessary operation of the heat source 12 can be avoided in advance.

The controller 13 of the hot-water supply system 100 according to the embodiment controls the first flow control device 6b so that the flow rate of the heat medium circulating in the primary circulation circuit 2 is kept at a predetermined first minimum flow rate or above, and controls the second flow control device 9b so that the flow rate of the hot water circulating in the secondary circulation circuit 3 is kept at a predetermined second minimum flow rate or above.

According to the hot-water supply system 100 according to the present embodiment, the hot water circulating in the secondary circulation circuit 3 can be controlled without causing a flow rate to be lower than the predetermined minimum flow rate.

In addition to controlling the first flow control device 6b and the second flow control device 9b so that the flow rate of the heat medium circulating in the primary circulation circuit 2 and the flow rate of the hot water circulating in the secondary circulation circuit 3 are equalized, the controller 13 of the hot-water supply system 100 according to Embodiment can control the first flow control device 6b and the second flow control device 9b so that a predetermined flow rate difference is made between the flow rate of the heat medium circulating in the primary circulation circuit 2 and the flow rate of the hot water circulating in the secondary circulation circuit 3.

According to the hot-water supply system 100 according to the present embodiment, the first flow control device 6b and the second flow control device 9b can be controlled so that a predetermined flow rate difference is made between the flow rate of the heat medium circulating in the primary circulation circuit 2 and the flow rate of the hot water circulating in the secondary circulation circuit 3.

Moreover, by controlling the flow rate of the heat medium circulating in the primary circulation circuit 2 to be larger than the flow rate of the hot water circulating in the secondary circulation circuit 3, the hot water supplied to the heat storage tank 5 from the secondary circulation circuit 3 can be kept at a high temperature even when the capacity of the heat source 12 drops and the temperature of the hot tap water is lowered.

Furthermore, by controlling the flow rate of the hot water circulating in the secondary circulation circuit 3 to be larger than the flow rate of the heat medium circulating in the primary circulation circuit 2, the temperature at an outlet of the circulation circuit heat exchanger 4 in the primary circulation circuit 2 can be lowered and thus the performance can be improved. In addition, a shearing stress generated in a flow channel of the secondary circulation circuit 3 is increased and, as a result, deposition of scales can be minimized.

### Reference Signs List

1 heat source unit 2 primary circulation circuit 3 secondary circulation circuit 4 circulation circuit heat exchanger 5 heat storage tank 6a first pump 6b first flow control device 7 first flow rate sensor 8 first temperature detection unit 9a second pump 9b second flow control device 10 second flow rate sensor 11 second temperature detection unit 12 heat source 13 controller 14 memory device 15 compressor 16 first heat source heat exchanger 17 expansion device 18 second heat source heat exchanger 19 three-way valve 20 notification unit 100 hot-water supply system

## Claims

1. A hot-water supply system (100) comprising:
a heat source (12);
a primary circulation circuit (2) communicating with the heat source (12);
a heat storage tank (5) configured to store hot water;
a secondary circulation circuit (3) communicating with the heat storage tank (5);
a circulation circuit heat exchanger (4) configured to heat hot water circulating in the secondary circulation circuit (3), through a heat medium circulating in the primary circulation circuit (2);
a controller (13),
a notification unit (20);
a first temperature detection unit (8) provided in the primary circulation circuit (2) between an inlet of the circulation circuit heat exchanger (4) and the heat source (12); and
a second temperature detection unit (11) provided in the secondary circulation circuit (3) between an outlet of the circulation circuit heat exchanger (4) and the heat storage tank (5),
the primary circulation circuit (2) including a first pump (6a) configured to circulate the heat medium, a first flow control device (6b) configured to control a circulation amount of the heat medium, and a first flow rate sensor (7) configured to detect a flow rate of the circulating heat medium,
the secondary circulation circuit (3) including a second pump (9a) configured to circulate the hot water, a second flow control device (9b) configured to control a circulation amount of the hot water, and a second flow rate sensor (10) configured to detect a flow rate of the circulating hot water,
the controller (13) being configured to control the first flow control device (6b) and the second flow control device (9b) so that the flow rate of the heat medium circulating in the primary circulation circuit (2) and the flow rate of the hot water circulating in the secondary circulation circuit (3) are equalized,
wherein, the controller (13) is configured to, in a heat storage operation, use a flow rate of the heat medium circulating in the primary circulation circuit (2) as a target flow rate of the hot water circulating in the secondary circulation circuit (3),
wherein,
the controller (13) is configured to, in a test operation, obtain a temperature difference between a first temperature detected by the first temperature detection unit (8) and a second temperature detected by the second temperature detection unit (11) when the first temperature and the second temperature are in a predetermined reference range,
the controller (13) is configured to, in a heat storage operation, obtain a temperature difference between the first temperature and the second temperature when the first temperature and the second temperature are in the reference range, and
the notification unit (20) is configured to, when a difference between the temperature difference obtained at the test operation and the temperature difference obtained at the heat storage operation is equal to or more than the predetermined reference value, notify that a time for performing maintenance of the circulation circuit heat exchanger (4) comes.

2. The hot-water supply system (100) of claim 1, further comprising:
a memory device (14),
wherein,
the controller (13) is configured to, in a test operation, store, in the memory device (14), a flow rate of the heat medium circulating in the primary circulation circuit (2) for each output relative to the first flow control device (6b) and a flow rate of the hot water circulating in the secondary circulation circuit (3) for each output relative to the second flow control device (9b).

3. The hot-water supply system (100) of claim 1 or 2, wherein the controller (13) is configured to stop the first pump (6a) and the heat source (12) when the flow rate of the hot water circulating in the secondary circulation circuit (3) is reduced by a predetermined reference value or more.

4. The hot-water supply system (100) of any one of claims 1 to 3, wherein the controller (13) is configured to control the first flow control device (6b) so that the flow rate of the heat medium circulating in the primary circulation circuit (2) is kept at a predetermined first minimum flow rate or above, and is configured to control the second flow control device (9b) so that the flow rate of the hot water circulating in the secondary circulation circuit (3) is kept at a predetermined second minimum flow rate or above.

5. The hot-water supply system (100) of any one of claims 1 to 4, wherein, in addition to being configured to control the first flow control device (6b) and the second flow control device (9b) so that the flow rate of the heat medium circulating in the primary circulation circuit (2) and the flow rate of the hot water circulating in the secondary circulation circuit (3) are equalized, the controller (13) is configured to control the first flow control device (6b) and the second flow control device (9b) so that a predetermined flow rate difference is made between the flow rate of the heat medium circulating in the primary circulation circuit (2) and the flow rate of the hot water circulating in the secondary circulation circuit (3).

## Patentansprüche

1. Warmwasserversorgungssystem (100), aufweisend:
eine Wärmequelle (12);
einen primären Zirkulationskreislauf (2), der mit der Wärmequelle (12) in Verbindung steht;
einen Wärmespeicherbehälter (5), der eingerichtet ist, Warmwasser zu speichern;
einen sekundären Zirkulationskreislauf (3), der mit dem Wärmespeicherbehälter (5) in Verbindung steht;
einen Zirkulationskreislauf-Wärmetauscher (4), der eingerichtet ist, im sekundären Zirkulationskreislauf (3) zirkulierendes Warmwasser durch ein im primären Zirkulationskreislauf (2) zirkulierendes Wärmemedium zu erwärmen;
eine Steuereinheit (13),
eine Benachrichtigungseinheit (20);
eine erste Temperaturerfassungseinheit (8), die in dem primären Zirkulationskreislauf (2) zwischen einem Einlass des Zirkulationskreislauf-Wärmetauschers (4) und der Wärmequelle (12) vorgesehen ist; und
eine zweite Temperaturerfassungseinheit (11), die in dem sekundären Zirkulationskreislauf (3) zwischen einem Auslass des Zirkulationskreislauf-Wärmetauschers (4) und dem Wärmespeicherbehälter (5) vorgesehen ist,
wobei der primäre Zirkulationskreislauf (2) eine erste Pumpe (6a), die eingerichtet ist, das Wärmemedium zu zirkulieren, eine erste Strömungssteuerungseinrichtung (6b), die eingerichtet ist, eine Zirkulationsmenge des Wärmemediums zu steuern, und einen ersten Strömungsratensensor (7), der eingerichtet ist, eine Strömungsrate des zirkulierenden Wärmemediums zu erfassen, aufweist,
wobei der sekundäre Zirkulationskreislauf (3) eine zweite Pumpe (9a), die eingerichtet ist, das Warmwasser zu zirkulieren, eine zweite Strömungssteuerungseinrichtung (9b), die eingerichtet ist, eine Zirkulationsmenge des Warmwassers zu steuern, und einen zweiten Strömungsratensensor (10), der eingerichtet ist, eine Strömungsrate des zirkulierenden Warmwassers zu erfassen, aufweist,
wobei die Steuereinheit (13) eingerichtet ist, die erste Strömungssteuerungseinrichtung (6b) und die zweite Strömungssteuerungseinrichtung (9b) so zu steuern, dass die Strömungsrate des im primären Zirkulationskreislauf (2) zirkulierenden Wärmemediums und die Strömungsrate des im sekundären Zirkulationskreislauf (3) zirkulierenden Warmwassers ausgeglichen sind,
wobei die Steuereinheit (13) eingerichtet ist, in einem ersten Wärmespeicherbetrieb eine Strömungsrate des im primären Zirkulationskreislauf (2) zirkulierenden Wärmemediums als Sollströmungsrate des im sekundären Zirkulationskreislauf (3) zirkulierenden Warmwassers zu verwenden,
wobei,
die Steuereinheit (13) eingerichtet ist, in einem Testbetrieb eine Temperaturdifferenz zwischen einer ersten Temperatur, die von der ersten Temperaturerfassungseinheit (8) erfasst wird, und einer zweiten Temperatur, die von der zweiten Temperaturerfassungseinheit (11) erfasst wird, zu erhalten, wenn die erste Temperatur und die zweite Temperatur in einem vorbestimmten Referenzbereich liegen,
die Steuereinheit (13) eingerichtet ist, in einem Wärmespeicherbetrieb eine Temperaturdifferenz zwischen der ersten Temperatur und der zweiten Temperatur zu erhalten, wenn die erste Temperatur und die zweite Temperatur in dem Referenzbereich liegen, und
die Benachrichtigungseinheit (20) eingerichtet ist, wenn eine Differenz zwischen der bei dem Testbetrieb erhaltenen Temperaturdifferenz und der bei dem Wärmespeicherbetrieb erhaltenen Temperaturdifferenz gleich wie oder größer als der vorbestimmte Referenzwert ist, darüber zu benachrichtigen, dass ein Zeitpunkt für die Durchführung einer Wartung des Zirkulationskreislauf-Wärmetauschers (4) gekommen ist.

2. Warmwasserversorgungssystem (100) nach Anspruch 1, ferner aufweisend:
eine Speichereinrichtung (14),
wobei,
die Steuereinheit (13) eingerichtet ist, in einem Testbetrieb in der Speichereinrichtung (14) eine Strömungsrate des in dem primären Zirkulationskreislauf (2) zirkulierenden Wärmemediums für jeden Ausgang in Bezug auf die erste Strömungssteuerungseinrichtung (6b) und eine Strömungsrate des in dem sekundären Zirkulationskreislauf (3) zirkulierenden Warmwassers für jeden Ausgang in Bezug auf die zweite Strömungsratensteuerungseinrichtung (9b) zu speichern.

3. Warmwasserversorgungssystem (100) nach Anspruch 1 oder 2, wobei die Steuereinheit (13) eingerichtet ist, die erste Pumpe (6a) und die Wärmequelle (12) zu stoppen, wenn die Strömungsrate des im sekundären Zirkulationskreislauf (3) zirkulierenden Warmwassers um einen vorbestimmten Referenzwert oder mehr reduziert wird.

4. Warmwasserversorgungssystem (100) nach einem der Ansprüche 1 bis 3, wobei die Steuereinheit (13) eingerichtet ist, die erste Strömungssteuerungseinrichtung (6b) so zu steuern, dass die Strömungsrate des im primären Zirkulationskreislauf (2) zirkulierenden Wärmemediums auf einer vorbestimmten ersten Mindestströmungsrate oder darüber gehalten wird, und eingerichtet ist, die zweite Strömungssteuerungseinrichtung (9b) so zu steuern, dass die Strömungsrate des im sekundären Zirkulationskreislauf (3) zirkulierenden Warmwassers auf einer vorbestimmten zweiten Mindestströmungsrate oder darüber gehalten wird.

5. Warmwasserversorgungssystem (100) nach einem der Ansprüche 1 bis 4, wobei die Steuereinheit (13), zusätzlich dazu, eingerichtet zu sein, die erste Strömungssteuerungseinrichtung (6b) und die zweite Strömungssteuerungseinrichtung (9b) so zu steuern, dass die Strömungsrate des im primären Zirkulationskreislauf (2) zirkulierenden Wärmemediums und die Strömungsrate des im sekundären Zirkulationskreislauf (3) zirkulierenden Warmwassers ausgeglichen sind, eingerichtet ist, die erste Strömungssteuerungseinrichtung (6b) und die zweite Strömungssteuerungseinrichtung (9b) so zu steuern, dass eine vorbestimmte Strömungsratendifferenz zwischen der Strömungsrate des im primären Zirkulationskreislauf (2) zirkulierenden Wärmemediums und der Strömungsrate des im sekundären Zirkulationskreislauf (3) zirkulierenden Warmwassers hergestellt wird.

## Revendications

1. Système d'alimentation en eau chaude (100) comprenant :
une source de chaleur (12) ;
un circuit de circulation primaire (2) communiquant avec la source de chaleur (12) ;
un réservoir de stockage de chaleur (5) configuré pour stocker de l'eau chaude ;
un circuit de circulation secondaire (3) communiquant avec le réservoir de stockage de chaleur (5) ;
un échangeur de chaleur de circuit de circulation (4) configuré pour chauffer l'eau chaude circulant dans le circuit de circulation secondaire (3), par un milieu de chauffage circulant dans le circuit de circulation primaire (2) ;
un régulateur (13) ;
une unité de notification (20) ;
une première unité de détection de température (8) prévue dans le circuit de circulation primaire (2) entre une entrée de l'échangeur de chaleur de circuit de circulation (4) et la source de chaleur (12) ; et
une deuxième unité de détection de température (11) prévue dans le circuit de circulation secondaire (3) entre une sortie de l'échangeur de chaleur du circuit de circulation (4) et le réservoir de stockage de chaleur (5),
le circuit de circulation primaire (2) comportant une première pompe (6a) configurée pour faire circuler le milieu de chauffage, un premier dispositif de commande de flux (6b) configuré pour commander une quantité de circulation du milieu de chauffage, et un premier capteur de débit (7) configuré pour détecter un débit du milieu de chauffage circulant,
le circuit de circulation secondaire (3) comportant une deuxième pompe (9a) configurée pour faire circuler l'eau chaude, un deuxième dispositif de commande de flux (9b) configuré pour commander une quantité de circulation de l'eau chaude, et un deuxième capteur de débit (10) configuré pour détecter un débit de l'eau chaude circulante,
le régulateur (13) étant configuré pour réguler le premier dispositif de commande de flux (6b) et le deuxième dispositif de commande de flux (9b) de sorte que le débit du milieu de chauffage circulant dans le circuit de circulation primaire (2) et le débit de l'eau chaude circulant dans le circuit de circulation secondaire (3) soient égalisés,
dans lequel le régulateur (13) est configuré de manière à utiliser, dans une opération de stockage de chaleur, un débit du milieu de chauffage circulant dans le circuit de circulation primaire (2) comme débit cible de l'eau chaude circulant dans le circuit de circulation secondaire (3),
dans lequel,
le régulateur (13) est configuré de manière à obtenir, dans un fonctionnement d'essai, une différence de température entre une première température détectée par la première unité de détection de température (8) et une deuxième température détectée par la deuxième unité de détection de température (11) lorsque la première température et la deuxième température sont dans une plage de référence prédéterminée,
le régulateur (13) est configuré de manière à obtenir, dans un fonctionnement de stockage de chaleur, une différence de température entre la première température et la deuxième température lorsque la première température et la deuxième température se situent dans la plage de référence, et
l'unité de notification (20) est configurée de manière à, lorsqu'une différence entre la différence de température obtenue lors du fonctionnement d'essai et la différence de température obtenue lors du fonctionnement de stockage de chaleur est égale ou supérieure à la valeur de référence prédéterminée, notifier qu'une période pour la réalisation d'une maintenance de l'échangeur de chaleur de circuit de circulation (4) arrive.

2. Système d'alimentation en eau chaude (100) selon la revendication 1, comprenant en outre :
un dispositif de mémoire (14),
dans lequel,
le régulateur (13) est configuré de manière à stocker, dans un fonctionnement d'essai, dans le dispositif de mémoire (14), un débit du milieu de chauffage circulant dans le circuit de circulation primaire (2) pour chaque sortie par rapport au premier dispositif de commande de flux (6b) et un débit de l'eau chaude circulant dans le circuit de circulation secondaire (3) pour chaque sortie par rapport au deuxième dispositif de commande de flux (9b).

3. Système d'alimentation en eau chaude (100) selon la revendication 1 ou 2, dans lequel le régulateur (13) est configuré pour arrêter la première pompe (6a) et la source de chaleur (12) lorsque le débit de l'eau chaude circulant dans le circuit de circulation secondaire (3) est réduit d'une valeur de référence prédéterminée ou plus.

4. Système d'alimentation en eau chaude (100) selon l'une quelconque des revendications 1 à 3, dans lequel le régulateur (13) est configuré pour réguler le premier dispositif de commande de flux (6b) de sorte que le débit du milieu de chauffage circulant dans le circuit de circulation primaire (2) soit maintenu à un premier débit minimal prédéterminé ou supérieur, et est configuré pour réguler le deuxième dispositif de commande de flux (9b) de sorte que le débit de l'eau chaude circulant dans le circuit de circulation secondaire (3) soit maintenu à un deuxième débit minimal prédéterminé ou plus.

5. Système d'alimentation en eau chaude (100) selon l'une quelconque des revendications 1 à 4, dans lequel, en plus d'être configuré pour réguler le premier dispositif de commande de flux (6b) et le deuxième dispositif de commande de flux (9b) de sorte que le débit du milieu de chauffage circulant dans le circuit de circulation primaire (2) et le débit de l'eau chaude circulant dans le circuit de circulation secondaire (3) soient égalisés, le régulateur (13) est configuré pour réguler le premier dispositif de commande de flux (6b) et le deuxième dispositif de commande de flux (9b) de sorte qu'une différence de débit prédéterminée soit faite entre le débit du milieu de chauffage circulant dans le circuit de circulation primaire (2) et le débit de l'eau chaude circulant dans le circuit de circulation secondaire (3).
